# FASCICULE DE BREVET EUROPEEN

(11) **EP 0 499 559 B1**
(45) Date de publication et mention de la délivrance du brevet: **24.06.1998**
(21) Numéro de dépôt: 92450001.0
(22) Date de dépôt: 07.02.1992
(51) Int. Cl.: G01B 9/021, G01B 11/16

(54) **Procédé et dispositif de contrôle non-destructif par interféromètre holographique d'enceintes en matériau composite**
Verfahren und Vorrichtung zur zerstörungsfreien Kontrolle von Verbundmaterialräumen mittels holographischer Interferometrie
Procedure and apparatus for the non-destructive control of composite material containers by holographic interferometry

(30) Priorité: 13.02.1991 FR 9101982
(43) Date de publication de la demande: 19.08.1992
(73) Titulaire: AEROSPATIALE Société Nationale Industrielle, 75781 Paris Cédex 16 (FR)
(72) Inventeur: Bouteyre, Jacques, F-33160 Saint Medard en Jalles (FR)
(74) Mandataire: Thébault, Jean-Louis

(56) Documents cités:
- FR-A- 2 048 189
- GB-A- 2 018 455
- GB-A- 2 021 802
- US-A- 3 644 047
- US-A- 3 681 970
- US-A- 3 711 202
- US-A- 3 938 889
- US-A- 3 976 380
- US-A- 4 506 981
- APPLIED OPTICS. vol. 21, no. 20, Octobre 1982, NEW YORK US WAGNER ET AL.: 'USING OPTICAL CORRELATION TO MEASURE LEAK RATES IN SEALED PACKAGES.'

## Description

La présente invention se rapporte au contrôle non destructif d'enceintes en matériau composite bobiné sur liner métallique par interférométrie holographique.

Les enceintes en matériau composite bobiné sur liner métallique, telles que par exemple les réservoirs utilisés dans la technique spatiale pour le stockage de gaz sous haute pression, sont constituées d'un liner, par exemple en titane, qui assure une fonction d'étanchéité, revêtu extérieurement d'une coque en matériau composite bobiné, par exemple en "Kevlar" ou en carbone, qui assure la tenue mécanique, notamment à la pression, de l'ensemble.

Ces réservoirs peuvent avoir différentes formes, sphériques ou cylindro-sphériques par exemple, avec des diamètres variables de l'ordre de quelques dizaines de centimètres.

De façon à augmenter le domaine de fonctionnement linéaire du métal du liner pour le ramener au plus près de celui de la fibre de la coque, on soumet le liner à une pré-contrainte en gonflant les réservoirs au-delà de la limite élastique du métal.

Celui-ci se déforme de façon irréversible et lorsque la pression interne est supprimée, le liner se trouve comprimé alors que le composite reste légèrement tendu.

Une telle opération peut entraîner l'apparition de défauts internes localisés, dénommés flambages, du liner.

Ces flambages dont des replis internes localisés du liner formant des sortes de cloques dont la forme, variable, peut couvrir une surface de l'ordre de 50 mm de diamètre, et dont la hauteur peut atteindre une dizaine de millimètres.

Les flambages peuvent constituer des zones de fragilité susceptibles d'être à l'origine de ruptures du liner par écrasement en cours de service du réservoir, du fait de la pression d'utilisation importante de ce dernier, de l'ordre de 300 bars par exemple. De telles ruptures localisées du liner entraînent inévitablement des fuites du gaz contenu dans le réservoir.

Il est donc nécessaire de détecter les flambages, tout au moins ceux dont l'étendue ou les dimensions dépassent un certain seuil, de l'ordre d'une dizaine de millimètres de diamètre.

Jusqu'à maintenant on a utilisé pour ce faire une méthode par ultrasons. Mais ce type de méthode, bien que non destructif, valable sur des objets de petites dimensions, n'est pas adapté au contrôle d'objets de grande dimensions car il entraîne des temps de contrôle prohibitifs et est délicat à mettre en oeuvre.

En effet, il faut utiliser une sonde ultrasonore dont l'extrémité, de faible surface, doit être appliquée contre la face externe du réservoir à contrôler, en maintenant la sonde perpendiculaire à la surface auscultée et immobile le temps d'enregistrer les échos de la sonde à chaque application de cette dernière sur ladite surface. On imagine aisément le temps qui serait nécessaire pour ausculter ainsi, de proche en proche, la totalité de la surface externe par exemple d'un réservoir sphérique d'un diamètre externe de l'ordre de 650 mm par exemple.

La tâche est par ailleurs compliquée par la surface externe ondulée de la coque composite, en particulier au voisinage des pôles des réservoirs, du fait du mode d'enroulement des couches de fibres, un tel état de surface rendant délicat le positionnement correct de la sonde ultrasonore et incertaine la mesure de celle-ci.

Enfin, l'interprétation des échos de la sonde nécessite un matériel sophistiqué et un personnel spécialisé.

On pourrait envisager de transposer au contrôle de réservoirs du type ci-dessus, des techniques connues de contrôle non destructif par interférométrie holographique.

L'interférométrie holographique est une technique d'imagerie optique bien connue fondée sur l'utilisation d'une lumière cohérente fournie par un émetteur laser.

Le faisceau de sortie de l'émetteur laser est séparé en un faisceau dit objet et en un faisceau dit de référence. Le faisceau objet est dirigé sur l'objet à analyser et le front d'onde réfléchi par l'objet est recueilli sur un élément photosensible d'enregistrement ou plaque holographique, cependant que le faisceau de référence est dirigé directement sur ladite plaque holographique.

L'interférence entre les deux ondes cohérentes sur la plaque holographique fixe sur celle-ci, du fait des différences des trajets des faisceaux objet et de référence, les différences d'amplitude lumineuse, c'est-à-dire le codage de la phase par modulation d'amplitude, sous forme de franges constituant un hologramme.

Après développement de la plaque holographique, si l'on éclaire cette dernière sous le même angle que celui du faisceau de référence, avec une lumière monochromatique, on restitue une image en relief de l'objet.

L'interférométrie holographique dite à double exposition consiste à superposer sur la même plaque holographique deux hologrammes du même objet sous deux états de contrainte très proches. En général, le premier état correspond à une absence de contrainte tandis que, dans le second état, l'objet est soumis à une sollicitation ou une contrainte qui, s'il y a des défauts d'homogénéité dans l'objet, tels que failles, fissures ou décollements, va entraîner une déformation non-homogène de l'objet qui sera mise en évidence par des singularités dans le jeu de franges de l'interférogramme et qui sera donc facilement observable.

L'interférométrie holographique à double exposition a déjà fait l'objet de diverses applications.

Par le brevet US 3 938 889 on connaît un procédé de mesure par interférométrie du coefficient de dilatation thermique linéaire d'un polymère. Ce procédé dans lequel on fait se superposer sur une même plaque holographique deux hologrammes de l'échantillon sous deux températures différentes, permet de déceler un réseau régulier de franges d'interférence dont le nombre est directement lié au coefficient de dilatation thermique linéaire de l'échantillon.

Ce procédé ne vise nullement la détection de défauts localisés dans la masse de l'échantillon.

L'interférométrie holographique a fait cependant l'objet de plusieurs applications au contrôle non destructif d'objets ou structures.

C'est ainsi que par le brevet FR 84 11450 déposé par la Demanderesse, on décrit un procédé de contrôle par interférométrie holographique du décollement d'un revêtement intérieur de pièces creuses ou réservoirs, dans lequel la caméra holographique est introduite à l'intérieur de l'enceinte à contrôler et les interférogrammes sont réalisés sous deux états de pression de l'intérieur de l'enceinte. Plus précisément, la première prise d'image d'interférogramme est effectuée à pression ambiante alors que la seconde prise d'image est effectuée sous dépression.

Ce procédé malheureusement n'est pas transposable au contrôle de réservoirs du type dont il est question présentement, d'une part, parce que les dimensions de ces réservoirs et leur accès ne permettent pas l'introduction d'une caméra holographique à l'intérieur, et d'autre part, parce qu'il est hors de question de soumettre l'intérieur de ces réservoirs à des dépressions qui auraient tendance à amplifier ou même à créer les flambages. On ne pourrait pas davantage envisager de créer une surpression à l'intérieur des réservoirs car de telles surpressions ne seraient pas de nature à engendrer des variations des lignes d'isodéplacement à la surface externe des réservoirs, décelables et exploitables par interférométrie holographique.

On a déjà également utilisé l'interférométrie holographique, en direct ou à double exposition, pour le contrôle d'objets soumis à des sollicitations thermiques.

Le brevet US 3.681.970 décrit un procédé de contrôle par interférométrie holographique en direct ou à double exposition, sous sollicitation thermique, d'une structure métallique en vue de déceler d'éventuel défauts internes localisés.

A cet effet, on induit localement à l'intérieur de la structure métallique de la chaleur et on observe les variations dimensionnelles de la surface externe. La chaleur, en migrant vers la surface externe de la structure, va être plus ou moins freinée par l'existence par exemple d'une poche d'air et il apparaîtra ainsi à la surface externe des différentiels de température entraînant des différences locales de dilatation détectées par interférométrie holographique.

Ce procédé, mettant en oeuvre une injection locale de chaleur par induction électrique, ne permet de contrôler qu'une surface très réduite en sorte qu'il est totalement inapplicable, tout comme le contrôle par sonde ultrasonore rappelé plus haut, au contrôle de surfaces importantes.

On connaît également le brevet US 3.976.380 décrivant un procédé de contrôle non destructif par interférométrie holographique en temps réel d'objets soumis à des différences de température en vue de déceler d'éventuels défauts internes. L'application de la chaleur à l'objet se fait par conduction ou convection et sur toute la masse de l'objet, car le procédé vise plus précisément le contrôle d'un objet d'un même matériau, le but étant de déceler des anomalies dans l'homogénéité du matériau.

La présente invention vise à appliquer l'interférométrie holographique à double exposition, sous sollicitation thermique, à la détection d'éventuels flambages dans des enceintes en matériau composite bobiné sur liner métallique.

L'invention vise en particulier à proposer un procédé véritablement industriel permettant de contrôler rapidement et de manière remarquablement fiable la totalité de la paroi notamment de réservoirs en matériau composite bobiné sur liner métallique et, de préférence, d'effectuer un tel contrôle de façon systématique et entièrement automatique.

A cet effet, l'invention a pour objet un procédé de contrôle non destructif par interférométrie holographique d'un objet en vue de la détection d'éventuels défauts tels que des flambages, dans lequel on fait interférer deux images holographiques de la même zone à contrôler, prises dans deux états de sollicitation thermique différents, caractérisé en ce que l'objet est une enceinte en matériau composite bobiné sur liner métallique, en ce que la sollicitation thermique est appliquée de manière homogène à l'ensemble de la face intérieure de l'enceinte et la prise d'interférogramme est effectuée sur au moins une partie de la face externe de l'enceinte, en ce que la seconde image est prise après avoir porté le liner à une température différente de celle qu'il avait au moment de la prise de la première image et en ce que le déclenchement de la seconde prise d'image est commandé à la détection, à l'extérieur et à proximité de l'enceinte, d'une variation, consécutive à la modification de température subie par le liner , du rayonnement infrarouge externe émis par l'enceinte, égale à un seuil prédéterminé, révélant l'arrivée à l'extérieur de l'enceinte du front thermique engendré par la modification de température à l'intérieur, en sorte de faire apparaître sur ledit interférogramme un réseau de franges rendant compte d'éventuelles perturbations de lignes d'isodéplacement locales de la surface externe consécutives à un défaut.

Par un tel procédé, on obtient un réseau de franges qui rend compte des lignes d'isodéplacement de la zone observée sous la sollicitation thermique. Plus précisément, au droit d'un défaut tel qu'un flambage entre liner et coque composite externe, existant dans la zone observée, les lignes d'isodéplacement sont perturbées par le fait que le front thermique traversant, de l'intérieur vers l'extérieur, la paroi de l'enceinte contrôlée, est freiné par un phénomène de résistance thermique dû à la présence de la poche formée par ledit flambage et qui se comporte comme une zone isolante.

Il en résulte que la zone de la coque composite située au droit du flambage se déforme ou se déplace différemment des zones avoisinantes, ce que l'interférogramme révèle par des anomalies locales du réseau de franges.

Le fait d'appliquer la sollicitation thermique, par exemple à l'aide d'un fluide, à l'intérieur de l'enceinte de façon à porter la totalité de la masse du liner, de manière homogène, aux températures désirées pour les prises d'images holographiques, permet à la caméra holographique d'embrasser dans son champ une très large surface de la face externe de l'enceinte, voire la totalité observable de l'enceinte et, ainsi, en un nombre très réduit d'interférogrammes pouvant être ramené à un seul, de contrôler, de manière rapide et fiable, ladite surface observable.

Le fluide appliqué à l'intérieur de l'enceinte est de préférence de l'air à une température supérieure à la température régnant dans l'enceinte au moment de la prise de la première image et compatible avec la nature du matériau composite. Toutefois, on pourrait envisager l'application d'un fluide à une température inférieure à la température régnant dans l'enceinte au moment de la prise de la première image.

Le procédé est avantageusement applicable au contrôle en continu et automatique de la totalité de la surface externe d'enceintes de révolution, de type sphérique ou cylindro-sphérique par exemple, en appliquant à l'intérieur de l'enceinte un fluide à température contrôlée en sorte d'élever ou abaisser régulièrement la température dans l'enceinte pendant un laps de temps suffisant pour opérer successivement plusieurs interférogrammes relatifs chacun à une fraction déterminée de la surface externe de l'enceinte, le nombre d'interférogrammes correspondant au nombre de fractions de surface différentes nécessaires pour couvrir la totalité de ladite surface externe.

De préférence, l'application dudit fluide à température contrôlée dans l'enceinte est réalisée avant la prise de la première image du premier interférogramme, en sorte d'effectuer ladite prise de la première image à une température à l'intérieur de l'enceinte au moins légèrement supérieure ou inférieure à la température ambiante.

Dans le cas d'une élévation de température à l'intérieur de l'enceinte à contrôler en totalité, cette élévation sera contrôlée en sorte qu'à la fin du dernier interférogramme la température finale de l'enceinte soit substantiellement en deçà du seuil qui serait préjudiciable au matériau composite.

Le fluide injecté à l'intérieur de l'enceinte est par exemple de l'air propre, dépoussiéré, déshumidifié, chauffé à une température contrôlée supérieure à la température ambiante, introduit dans l'enceinte et extrait aussitôt suivant un débit régulier contrôlé.

Le procédé de l'invention fait appel à la technique connue de prise d'interférogrammes in situ, permettant ainsi de contrôler de manière rapide et entièrement automatique la totalité, par exemple, d'un réservoir sphérique en six interférogrammes réalisés en l'espace d'une heure environ, les différents interférogrammes pouvant être, à la manière également connue, contrôlée de manière quasi instantanée, à l'aide d'une caméra vidéo disposée derrière la caméra holographique et associée à un moniteur vidéo, par un opérateur non nécessairement spécialiste de l'holographie.

L'invention concerne également un dispositif pour la mise en oeuvre du procédé ci-dessus, comportant des moyens de support de l'objet à contrôler, une caméra holographique, un montage optique comprenant un laser d'enregistrement et des moyens optiques pour l'obtention de faisceaux objet, de référence, et de relecture, caractérisé en ce que les moyens de support de l'objet à contrôler sont agencés de manière à supporter l'enceinte, en ce qu'il comprend, en outre, un laser de relecture, des moyens pour appliquer de manière homogène à l'ensemble de la face interne de l'enceinte une sollicitation thermique, des moyens pour détecter un seuil prédéterminé de variation de la température d'au moins une partie de la face externe de l'enceinte, par le rayonnement infrarouge externe émis par l'enceinte et des moyens reliés à la caméra holographique, aux lasers d'enregistrement et de relecture et auxdits moyens de détection de la température de l'enceinte pour commander les prises d'images holographiques.

D'autres caractéristiques et avantages de l'invention ressortiront de la description qui va suivre d'un mode de réalisation d'un tel dispositif, description donnée à titre d'exemple uniquement et en regard des dessins annexés sur lesquels :
- Figure 1 est une vue schématique en coupe diamétrale d'un réservoir sphérique en matériau composite bobiné sur liner métallique ;
- Figure 2 est un schéma d'une partie d'une installation de contrôle de réservoirs selon l'invention ;
- Figure 3 est un schéma général d'une installation de contrôle de réservoirs mettant en oeuvre le procédé de l'invention ;
- Figure 4 représente de manière plus détaillée le montage optique des dispositifs lasers suivant un mode de mise en oeuvre particulier de l'invention ;
- Figure 5 est un schéma illustrant un mode de mise en oeuvre de moyens de support et de présentation d'une enceinte en vue de son contrôle ;
- Figure 6 est une vue en perspective schématique d'un module ou caisson de contrôle de réservoir mettant en oeuvre le procédé de l'invention ;
- Figure 7 est un chronogramme illustrant la prise successive d'interférogrammes conformément à l'invention ;
- Figure 8 représente un interférogramme d'une zone saine sans flambage, et
- Figure 9 représente un interférogramme d'une zone à défaut.

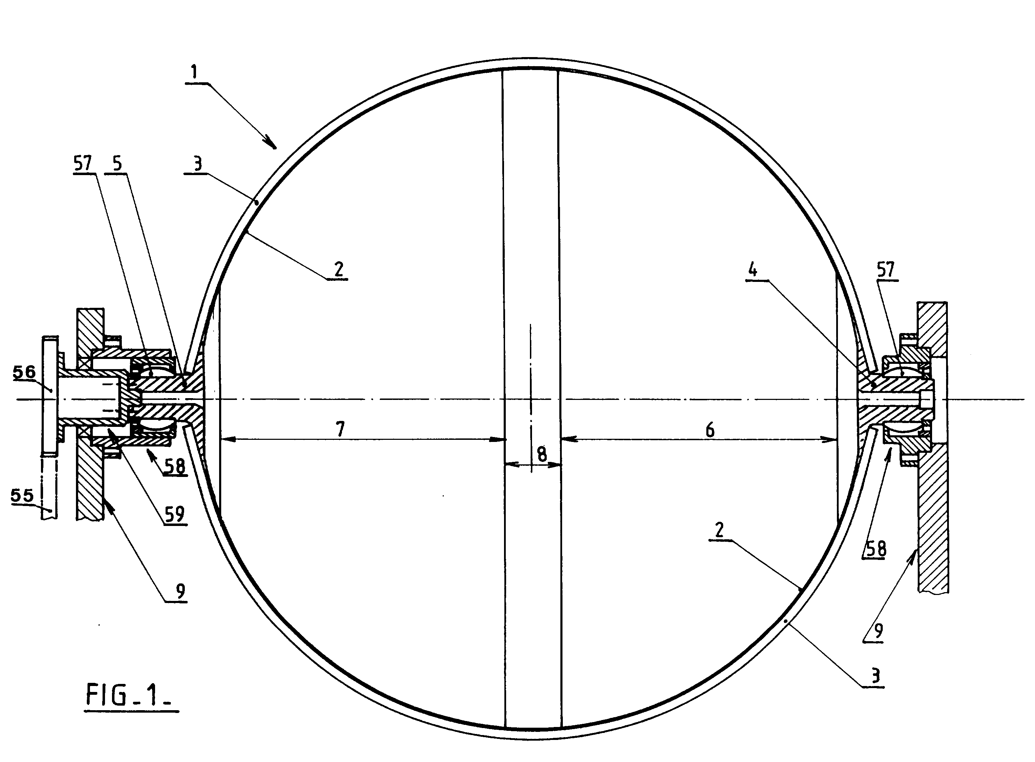

Sur la figure 1 on a représenté en coupe diamétrale un réservoir sphérique 1, d'une diamètre externe de 650 mm et constitué d'un liner métallique 2, par exemple du titane, d'une épaisseur d'environ 1 mm, sur lequel a été bobiné une enveloppe filamentaire 3, par exemple en "Kevlar". En deux endroits diamétralement opposés de la sphère 1, appelés pôles, sont ménagés deux tourillons tubulaires 4 et 5, solidaires du liner 2, servant au support et à l'entraînement en rotation du liner pour son bobinage. L'un des tourillons sera ultérieurement obturé, cependant que l'autre recevra un raccord pour le remplissage et le vidage du réservoir.

Les flambages susceptibles d'apparaître sur le liner 2 peuvent se rencontrer essentiellement dans deux zones symétriques repérées en 6 et 7 sur la figure 1 et qui correspondent à la surface totale de la sphère diminuée des deux calottes des pôles correspondant à des zones de renforcement d'épaisseur du liner au droit des tourillons et d'une petite ceinture équatoriale 8. Cette dernière correspond à une zone de raccordement et soudage des deux hémisphères définissant le liner 2, zone qui présente de ce fait une meilleure rigidité et n'est pas sujette à flambage.

Le procédé de détection d'éventuels flambages du liner 2 consiste, selon l'invention, à faire interférer deux images holographiques de la même zone à contrôler de la sphère 1, prises dans deux états de sollicitation différents de la sphère, la sollicitation appliquée étant une contrainte thermique exercée, suivant un mode de mise en oeuvre de l'invention, par l'intermédiaire d'un fluide introduit à l'intérieur de la sphère et ayant une température différente, supérieure ou inférieure, à la température ambiante.

L'invention va être décrite plus en détail dans une application au contrôle d'enceintes, tels que des réservoirs, de forme de révolution, sphérique ou cylindro-sphérique par exemple, pour lesquelles il est nécessaire d'explorer pratiquement la totalité de la surface externe de l'enceinte à contrôler, c'est-à-dire de présenter cette dernière sous le faisceau laser d'enregistrement dans différentes positions afin de couvrir, de proche en proche, la totalité de ladite surface, mais il est bien évident que si la zone à contrôler peut être en totalité éclairée par le faisceau laser en une seule passe, il ne sera pas nécessaire de déplacer l'objet à contrôler, ni même éventuellement de prévoir des moyens de support et présentation de cet objet, à déplacement contrôlé.

De même, l'invention sera décrite en utilisant comme fluide applicateur d'une contrainte thermique de l'air porté à une température déterminée supérieure à la température ambiante, mais on pourrait éventuellement utiliser comme fluide un autre gaz, ou bien un liquide, tel que de l'eau par exemple.

Le fluide applicateur d'une contrainte thermique peut également tout aussi bien être utilisé à une température inférieure à la température ambiante.

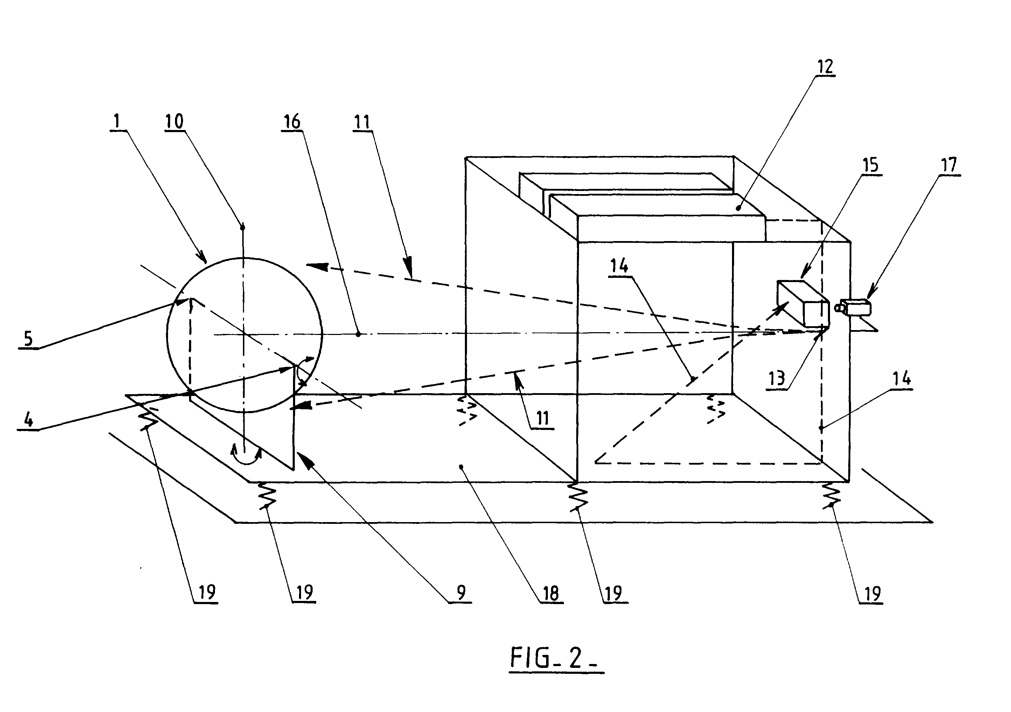

La figure 2 représente un réservoir sphérique 1 du type de la figure 1, supporté par un dispositif en forme de fourche 9 dont les deux extrémités de la fourche supportent les tourillons 4,5 de la sphère 1. Le centre de la sphère se trouve sur l'axe vertical 10 de la fourche.

Des moyens à commande de déplacement contrôlée sont prévus pour faire pivoter l'axe 10 du dispositif de support et présentation 9 de l'angle désiré, dans un sens ou dans l'autre.

De même, l'un des supports des tourillons 4,5 est agencé pour permettre l'entraînement en rotation de la sphère 1 autour de l'axe des tourillons, dans un sens ou dans l'autre, du degré désiré.

La sphère 1 est susceptible d'être illuminée par un faisceau symbolisé en 11 d'un laser d'enregistrement ou de tir 12.

Le faisceau issu du laser 12 est divisé par une séparatrice 13 en une partie constituant le faisceau objet 11 et une partie constituant le faisceau de référence 14.

Une caméra holographique à film thermoplastique 15 est placée à proximité de la séparatrice 13 de façon à voir la sphère 1 sensiblement sous le même angle que le faisceau objet 11 dont l'axe est symbolisé en 16 et passe par le centre de la sphère 1. La caméra 15 reçoit le faisceau laser réfléchi par la sphère 1 ainsi que, sous un angle déterminé, le faisceau de référence 14.

Une caméra de visualisation 17 placée derrière la caméra holographique permet de recueillir l'image des interférogrammes.

La figure 2 ne représente que les parties de l'installation de contrôle qui doivent être isolées de tout vibration et qui, de ce fait, doivent être montées sur un châssis flottant symbolisé en 18, monté lui-même sur des amortisseurs symbolisés en 19. La technique d'interférométrie holographique impose une grande stabilité des éléments optiques et de l'objet sous test et les vibrations sont particulièrement néfastes à la production d'hologrammes.

Le rôle des amortisseurs 19 est de filtrer les fréquences vibratoires supérieures à 5 Hz venant du sol. De même, la motorisation des mouvements du dispositif de support et présentation de la sphère 1 doit tenir compte de cet impératif et être réalisée par exemple avec des butées lentes amorties.

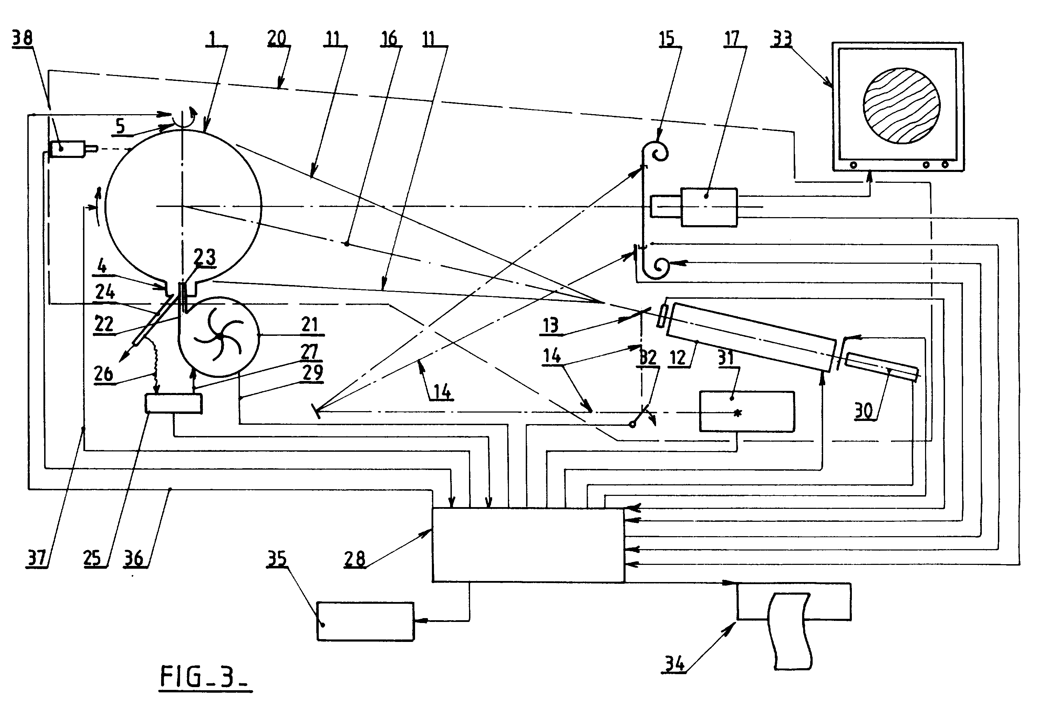

La figure 3 est un schéma général d'une installation de contrôle mettant en oeuvre le procédé de l'invention et incorporant les éléments de la figure 2, isolés des vibrations du sol et regroupés à l'intérieur du cadre fictif 20.

La sphère 1 est représentée sur la figure 3 en coupe diamétrale avec l'axe des pôles (4,5) dans le plan de la figure.

Le contrôle par interférométrie holographique impose d'appliquer une contrainte à l'objet sous test.

Conformément à l'invention, la contrainte est une contrainte thermique appliquée de manière homogène à l'ensemble du liner et mise en oeuvre en introduisant de l'air à une température déterminée à l'intérieur de la sphère en vue de définir deux états de contrainte différents permettant de prendre deux prises de vue holographiques de la sphère dans ces deux états de contrainte.

De l'air chaud est injecté à une température et à un débit contrôlés, à partir d'un dispositif d'injection symbolisé en 21, non solidaire de l'ensemble 20 et relié par une canalisation souple 22 à une canne 23 d'injection à l'intérieur de la sphère 1 disposée dans le tourillon 4 par exemple. Afin de ne pas perturber l'environnement holographique l'embout de la canne 23 est agencé comme un diffuseur et de façon à recueillir l'air après circulation à l'intérieur de la sphère, cet air étant évacué de la sphère par une seconde canalisation 24 mise à l'atmosphère.

Une boucle de contre-réaction 25 réalisée par une prise de température 26 sur la sortie de l'air de la sphère permet de réguler (27) la température de l'air injecté par le dispositif 21.

Un micro-ordinateur 28 relié (liaison 29) au dispositif 21 et à la boucle de contre-réaction 25 permet de réguler la température et éventuellement le débit de l'air injecté dans la sphère 1 de façon à contrôler la rampe de montée en température de l'air dans la sphère en fonction du temps.

Le circuit optique comprend un laser d'enregistrement ou de tir 12 constitué par exemple par un laser pulsé de type Rubis dont le trajet du faisceau est matérialisé par un laser traceur He-Ne 30. Le montage optique est disposé en cavité repliée avec un bras référence (14) adaptable en longueur.

Le système d'enregistrement holographique est constitué par la caméra à film thermoplastique 15. Ce type de caméra, bien connu, réalise in situ et dans des temps très courts des hologrammes, permettant ainsi de procéder en un temps relativement court et de manière entièrement automatique à la réalisation d'interférogrammes successifs.

Un laser de relecture 31, par exemple de type He-Ne identique au laser traceur 30 et dont la longueur d'onde est aussi proche que possible de celle du laser d'enregistrement 12. Le faisceau de relecture 31 est substitué au faisceau de référence 14 à l'aide d'un miroir pivotant 32.

La caméra de visualisation 17 placée derrière la caméra à film thermoplastique 15 est par exemple du type vidéo ou CCD et est reliée à un moniteur de contrôle 33. La caméra 17 permet de recueillir l'image des interférogrammes, cette image étant, parallèlement à sa visualisation sur le moniteur 33, numérisée dans une carte-image placée dans le micro-ordinateur 28.

Une imprimante 34 reliée au micro-ordinateur 28 permet, comme il sera expliqué plus loin, d'éditer un procès-verbal de contrôle de la sphère 1.

Un streamer 35 permet d'effectuer les sauvegardes nécessaires sur le micro-ordinateur 28.

Le micro-ordinateur 28 est bien entendu relié aux moyens de commande (liaison 36) de la rotation de la sphère 1 autour de l'axe des pôles ou tourillons 4,5 et aux moyens de commande (liaison 37) de la rotation du dispositif de support et présentation 9 (figure 2) de la sphère 1.

Enfin, un pyromètre optique infrarouge 38, relié au micro-ordinateur 28, est chargé de mesurer le rayonnement infrarouge de la sphère 1.

Le pyromètre 38 est disposé par exemple à une distance comprise entre 100 et 500 mm de la sphère, dans le cône d'ombre de cette dernière (par rapport à l'illumination laser).

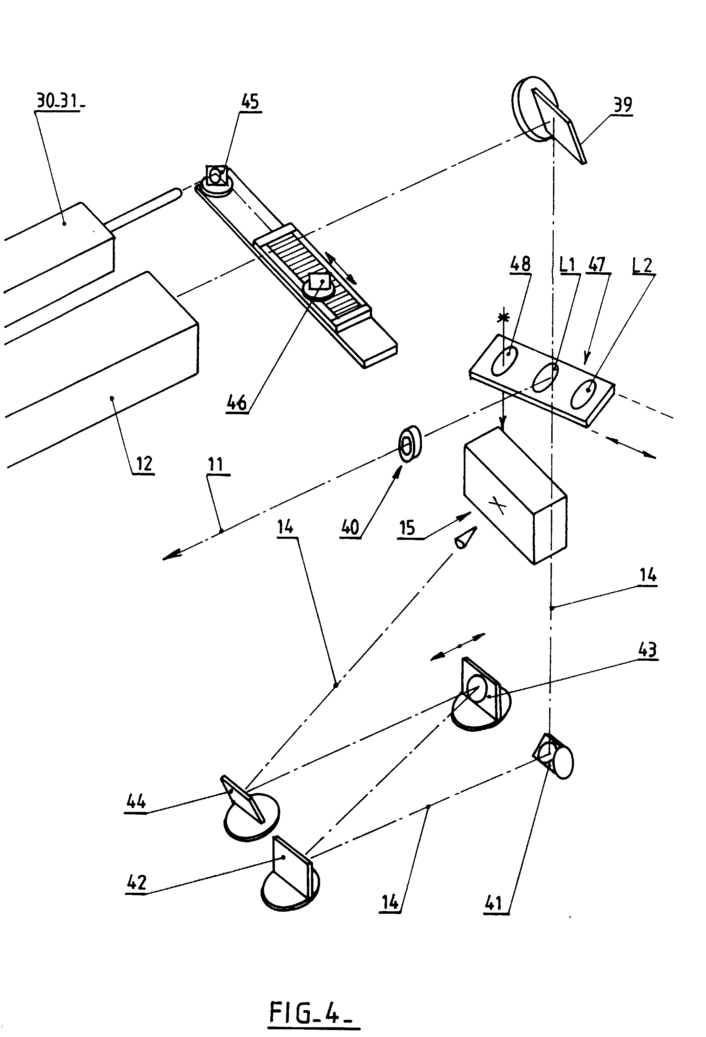

La figure 4 représente de manière un peu plus détaillée un mode de réalisation particulier du montage optique de l'installation de la figure 2.

Le faisceau issu du laser d'enregistrement 12 est réfléchi à 45° par un miroir de renvoi 39 vers une séparatrice 13', de conception particulière.

Le faisceau objet 11 à la sortie de la séparatrice 13' traverse un ensemble 40 d'éclairement diffus.

Le faisceau de référence 14 est réfléchi à 45° par un miroir 41, puis par des miroirs de renvois sous des angles de 20° respectivement fixe 42 et réglable 43, permettant d'avoir des bras de montage optique d'équilongueur (faisceau référence 14/faisceau objet 11), et enfin par un dernier miroir 44 de renvoi vers la caméra à film thermoplastique 15.

Dans le dispositif représenté sur la figure 4, un seul laser He-Ne (30,31) remplit les fonctions de traçage et de relecture respectivement des lasers 30 et 31 de la figure 3. A cet effet, le faisceau issu du laser 30,31 est dévié à 45° par un miroir 45 en direction d'un miroir 46 de renvoi mobile entre deux positions, l'une, pour laquelle il est sur la trajectoire du faisceau issu du laser 12 et renvoie le faisceau du laser He-Ne vers le miroir 39 et, l'autre, pour laquelle il est en dehors de la trajectoire du faisceau du laser 12.

La séparatrice 13' est constituée, conformément à l'invention, d'une plaquette mobile 47 portant en parallèle et côte à côte une lame de verre traitée anti-reflet 48 laissant passer l'intégralité du faisceau sur la branche référence 14, lors de la relecture, une lame séparatrice L1 pour le contrôle d'une surface en "Kevlar", une lame séparatrice L2 pour le contrôle d'une surface en carbone et éventuellement une ou plusieurs autres lames séparatrices adaptées à d'autres matériaux composites. Un moteur (non représenté) permet, sous la commande du micro-ordinateur 28, de déplacer la plaquette 47 pour placer dans le faisceau renvoyé par le miroir 39 soit la séparatrice L1, soit la séparatrice L2, en fonction de la nature du matériau composite, soit la lame de relecture 48. Ces lames L1, L2 ont des caractéristiques différentes permettant de régler le rapport référence 14/objet 11 en fonction du type du matériau composite.

La lame 48 permet de conserver le même trajet optique sur le bras référence 14 en créant, lors de la relecture, le même déport lié à la réfraction que les lames L1, L2 lors de l'enregistrement.

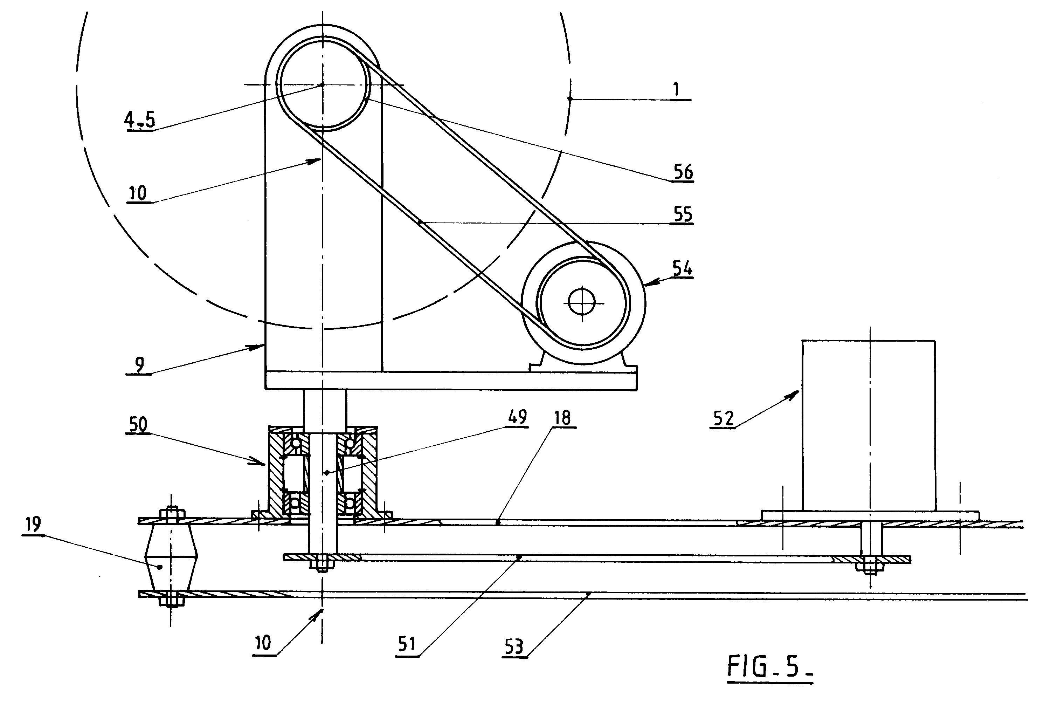

La figure 5 illustre schématiquement un mode de réalisation des moyens de support et présentation de la sphère 1.

Le support en forme de fourche 9 comporte par exemple un arbre vertical 49 monté tourillonnant dans un système de paliers à billes 50 fixé sur le châssis flottant 18 et entraîné, à son extrémité inférieure, par l'intermédiaire d'une transmission à chaîne 51, par un moteur pas à pas 52 également monté sur le châssis 18, ce dernier étant relié au sol, symbolisé par un châssis fixe 53, par des amortisseurs 19.

La fourche 9 comporte également un prolongement latéral supportant un moteur pas à pas 54 d'entraînement, par exemple par une courroie crantée 55, d'un pignon 56 calé sur l'axe des tourillons 4,5 et solidaire de la sphère 1.

Le moteur 52 assure la rotation contrôlée de la fourche 9 autour de l'axe vertical 10, cependant que le moteur 54 assure la rotation contrôlée de la sphère 1 autour de son axe horizontal 4,5.

La sphère 1 est montée sur la fourche 9 comme illustré à titre d'exemple par la figure 1, à l'aide de rotules 57 engagées sur les tourillons 4, 5 et retenues dans des cages 58 fixées sur les branches de la fourche 9.

L'un des tourillons (4) sert de passage à la canne diffusante 23. Etant donné le diamètre relativement étroit du passage, la canne 23, qui est un simple tube muni d'une extrémité arrondie percée de trous de diffusion, est disposée à l'intérieur du conduit 24, également introduit dans le tourillon 4, de recueil et d'évacuation de l'air hors de l'enceinte.

L'autre tourillon (5) est solidarisé d'un moyeu d'entraînement 59, lui-même solidarisé dudit pignon 56 d'entraînement en rotation de la sphère 1.

On va maintenant décrire le principe du procédé selon l'invention de détection d'éventuels flambages du liner de la sphère 1, ainsi que le processus de contrôle automatique et systématique de la sphère à l'aide de l'installation représentée sur la figure 3.

Il a été dit plus haut que l'interférométrie holographique était mise en oeuvre dans deux états différents de sollicitation thermique de la sphère 1, ladite sollicitation thermique étant appliquée, dans le présent exemple, à l'aide d'un flux d'air à température déterminée injecté à l'intérieur de la sphère.

Après une première prise d'image holographique de la surface de la sphère 1 illuminée par le laser d'enregistrement 12, la sphère se trouvant dans un premier état de sollicitation thermique, une seconde prise d'image holographique de la même partie de surface est effectuée alors que la sphère se trouve dans un second état de sollicitation thermique du fait de la présence à l'intérieur de la sphère dudit flux d'air à température déterminée.

S'il existe un flambage dans la zone à contrôler, cela se traduit par la présence d'une poche qui se comporte comme une zone isolante qui va freiner le cheminement, de l'intérieur de la sphère vers l'extérieur, du front thermique engendré par l'apport de calories à l'intérieur de la sphère. Ce freinage du front thermique se traduit par le fait qu'à la surface externe de la sphère, au droit du flambage, apparaîtra un certain gradient de température perturbant localement les lignes d'isodéplacement de ladite surface externe.

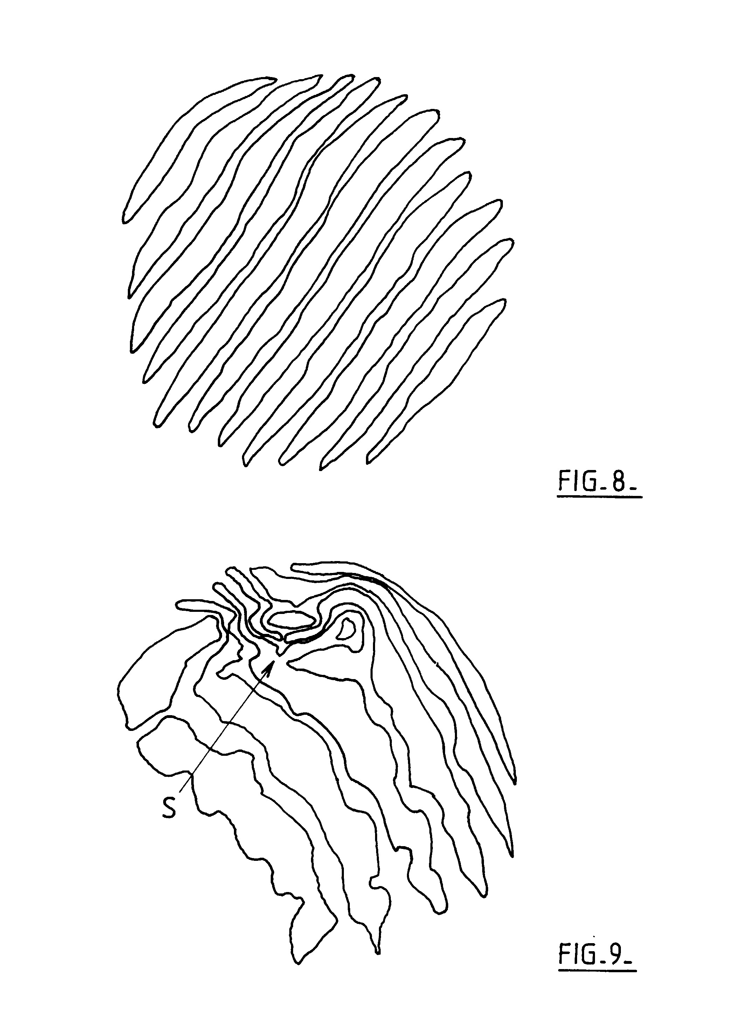

La seconde prise d'image holographique permet d'obtenir un interférogramme dont le réseau de franges rend compte des perturbations des lignes d'isodéplacement et signale ainsi la présence d'un flambage. Pour illustrer ceci on se reportera aux figures 8 et 9 représentant, la première, un réseau régulier de franges d'un interférogramme d'une zone de la sphère saine, c'est-à-dire ne comportant pas de flambage, et, la seconde, un interférogramme dont le réseau de franges présente des singularités indiquées par la flèche S, révélatrices d'un flambage.

L'interférogramme ainsi obtenu permet non seulement de signaler la présente d'un flambage (ou de plusieurs flambages distincts) mais encore de le situer et le circonscrire précisément à l'intérieur de la surface de la sphère illuminée par le laser d'enregistrement.

La première prise d'image holographique peut être effectuée à la température ambiante, c'est-à-dire avant l'injection d'air chaud à l'intérieur de la sphère. Cependant, il est préférable, afin d'être indépendant des conditions de température ambiante et de réaliser dans les mêmes conditions une séquence de plusieurs interférogrammes sur la même sphère et au cours d'une même montée en température de la sphère, d'envoyer de l'air à température et débit contrôlés à l'intérieur de la sphère avant la première prise d'image holographique.

La température à l'intérieur de la sphère doit être contrôlée de manière à s'écarter de la température ambiante sans jamais dépasser la température maximale autorisée pour la sécurité du réservoir. Cette température maximale est fixée, pour les types de réservoirs à "Kevlar" ou carbone indiqués plus haut à 50°C.

Le contrôle de la température et du débit de l'air injecté dans la sphère 1 permet de contrôler la rampe de montée en température de l'air à l'intérieur de la sphère.

La seconde prise d'image holographique est effectuée quelques secondes plus tard. Dans la pratique, le déclenchement de la seconde prise d'image ne se fait pas en fonction du temps car il est difficile d'apprécier, d'un réservoir à un autre, le temps de propagation du front thermique à travers la paroi, mais en fonction de l'élévation de la température détectée à l'extérieur de la sphère 1 à l'aide du pyromètre 38.

On peut adopter comme seuil de déclenchement de la seconde prise d'image, par exemple une élévation de température détectée par le pyromètre 38 de 0,1 ou 0,2 °C par rapport à l'instant de la prise de la première image.

L'installation dont le principe est illustré par la figure 3 permet de répéter automatiquement et successivement la réalisation d'un tel interférogramme pour différentes parties de la surface externe de la sphère et au cours d'une seule montée en température de la sphère entre la température ambiante et la température maximale tolérée, par exemple 50°C.

Il y aura en fait autant d'interférogrammes que de parties différentes de la sphère 1 qu'il sera nécessaire d'illuminer par le laser 12 pour couvrir la totalité de la surface à contrôler.

Le processus opératoire est le suivant. On met d'abord en place la sphère 1 à contrôler sur le dispositif de support et présentation 9 (figure 2). La sphère est positionnée de manière à présenter, comme illustré par la figure 3, l'un de ses pôles ou hémisphères (tourillon 4) vers le laser d'enregistrement 12. En fait, pour qu'il n'y ait pas d'ombre portée sur l'image holographique, le faisceau 11 est positionné de façon que l'un de ses bords tangente sensiblement la sphère au niveau dudit tourillon 4.

Le chauffage de la sphère 1 est lancé en envoyant par le dispositif d'injection 21 un flux d'air chaud à débit contrôlé. Comme il a été dit plus haut, l'air injecté dans la sphère 1 est diffusé de façon homogène, est récupéré par la canalisation 24 et, de préférence, recyclé vers le dispositif 21 pour limiter l'échauffement de l'environnement, notamment les matériels optiques.

Le contrôle de la température de l'air et de son débit, à l'aide des dispositifs 21, 27 permet de contrôler la rampe de montée en température de l'air à l'intérieur de la sphère.

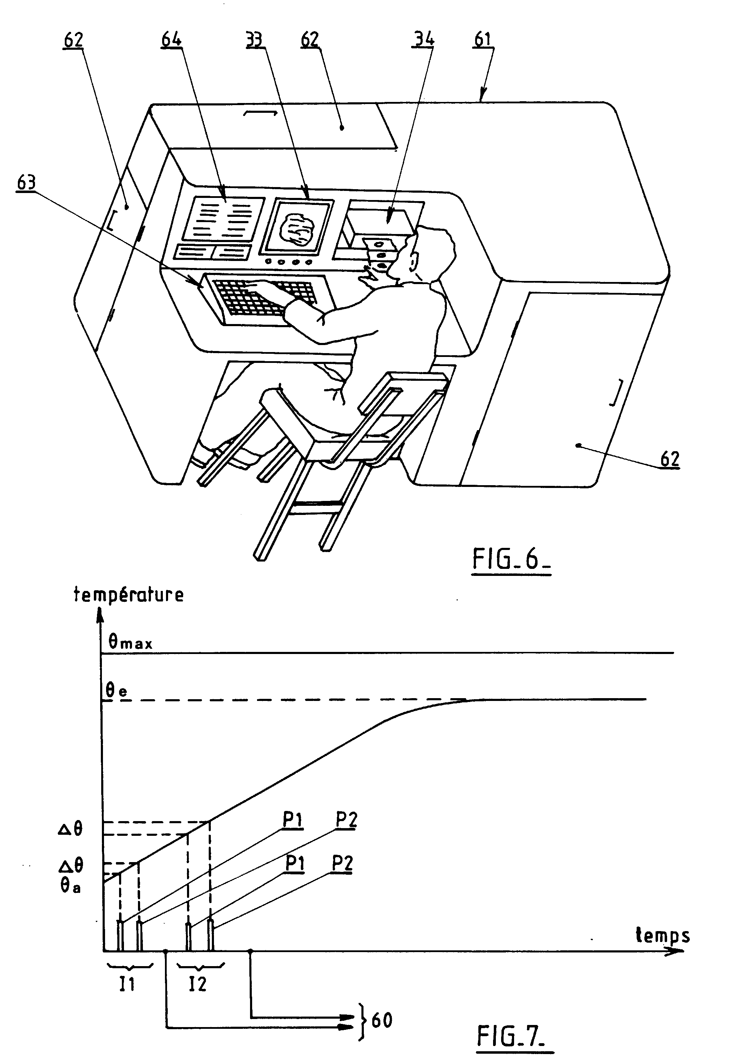

La figure 7 est un chronogramme illustrant la montée en température de la sphère 1 au cours de son contrôle. La température, détectée par le pyromètre 38, va passer de la température ambiante θa à la température d'équilibre θe, sensiblement inférieure à la température limite maximale θmax supportable pour le matériau composite. C'est durant la partie rectiligne de la montée en température entre θa et θe que seront effectués automatiquement et sous la commande du micro-ordinateur 28 les n interférogrammes correspondant à n parties différentes de la surface externe de la sphère, nécessaires et suffisantes pour couvrir la totalité de la surface à contrôler.

Sur la figure 7 on n'a représenté que les deux premiers interférogrammes.

Le premier interférogramme I*1* est défini par les deux prises d'images P*1* et P*2* déclenchées à partir du signal fourni par le pyromètre 38.

La première prise P*1* est déclenchée à partir d'un seuil de température hors de l'ambiance et la seconde, dès la détection par le pyromètre 38 d'une élévation Δθ de température, à partir de l'instant de la prise p*1*, égale à 0,1 ou 0,2 °C par exemple.

Les ordres de tir du laser 12 sont donnés par le micro-ordinateur 28, commandant et contrôlant par un logiciel approprié tous les paramètres de l'installation ainsi que la commande des moyens de chauffage de la sphère, de positionnement de cette dernière, de la caméra holographique 15 (avance du film thermoplastique, chauffage de ce dernier pour son développement).

Le micro-ordinateur 28 commande également pour chaque tir ou prise d'image, le basculement du miroir de relecture 32 (ou le déplacement du miroir 46 dans le cas de l'utilisation du montage de la figure 4), l'allumage du laser de relecture 31, l'acquisition de l'image, via la caméra 17, pour son stockage, puis le retour en position initiale des miroirs 32 ou 46.

Sur la figure 7 on a symbolisé en 60 les ordres, donnés entre deux interférogrammes par le micro-ordinateur 28, pour faire avancer le film thermo-plastique et modifier la position de la sphère 1 en vue de l'interférogramme suivant.

La sphère 1 peut être totalement contrôlée à l'aide de six interférogrammes, à savoir trois avec l'orientation de la sphère représentée sur la figure 3, la sphère étant simplement pivotée deux fois autour de l'axe des tourillons 4,5 et trois autres interférogrammes (et deux rotations autour de l'axe 4,5) après rotation (commande 37) de 180° de l'axe 4,5. Au cours de ces mouvements le pyromètre 38 et les dispositifs 21 et 25 demeurent immobiles.

Le moniteur vidéo 33 permet de visualiser chaque interférogramme.

L'imprimante 34 permet d'éditer un procès-verbal du contrôle effectué.

Une fonction dite "manuelle" permet à l'opérateur, via le micro-ordinateur 28, d'accéder à des éléments de l'installation ou à des morceaux de programme (phase de mise au point, réglages, retour sur un point singulier mis à jour lors du contrôle).

La pente de la rampe de montée en température de la sphère (figure 7) peut être plus ou moins forte : cela dépend de la plage de température disponible entre la température ambiante et la température maximale autorisée et du nombre d'interférogrammes à réaliser au cours de la même montée en température. C'est pourquoi il est important de prévoir des moyens de contrôle de la température et du débit de l'air injecté à l'intérieur de la sphère 1.

L'air doit être par ailleurs propre, dépoussiéré, déshumidifié.

Il serait possible d'injecter de l'air à une température inférieure à la température ambiante pour procéder à la même série d'interférogrammes qu'avec une rampe de montée en température de la sphère, mais avec une rampe descendante de température, dans des conditions analogues de contrôle de débit et température du flux d'air injecté.

On peut également envisager d'utiliser un autre fluide gazeux que l'air, ou encore un liquide, par exemple de l'eau.

La figure 6 illustre un mode de réalisation d'un caisson de contrôle regroupant les éléments de l'installation de la figure 3.

Pour des questions de sécurité de l'opérateur, et pour réaliser la chambre noire nécessaire à l'enregistrement des interférogrammes holographiques, les divers composants mécaniques et optiques de l'installation sont placés dans un carénage ou caisson 61 avec des trappes ou portes 62 d'accès pour les diverses manipulations ou interventions telles que notamment la mise en place et le retrait du réservoir à contrôler, le chargement de la caméra holographique.

Un pupitre de commande et visualisation est ménagé et où sont regroupés le clavier 63 de dialogue avec le micro-ordinateur 28, la console vidéo 64 de ce dernier, le moniteur 33 et l'imprimante 34.

Le procédé de l'invention a été décrit en utilisant comme moyen pour appliquer une contrainte thermique au liner 2 un fluide à température contrôlée injecté à l'intérieur de l'enceinte 1, mais on pourrait également appliquer une telle contrainte à l'aide de tout autre moyen propre à créer la différence de température requise tel que, par exemple, une source de rayonnement infra-rouge montée à l'extrémité d'une tige introduite à l'intérieur de l'enceinte.

Une telle source peut être substituée à la source de fluide (21 à 23) décrite ci-dessus, sans modifications des autres parties du dispositif illustré par la figure 3.

## Revendications

1. Procédé de contrôle non destructif par interférométrie holographique d'un objet (1) en vue de la détection d'éventuels défauts tels que des flambages, dans lequel on fait interférer deux images holographiques de la même zone à contrôler, prises dans deux états de sollicitation thermique différents, caractérisé en ce que l'objet est une enceinte (1) en matériau composite (3) bobiné sur liner métallique (2), en ce que la sollicitation thermique est appliquée de manière homogène à l'ensemble de la face intérieure de l'enceinte et la prise d'interférogramme est effectuée sur au moins une partie de la face externe de l'enceinte, en ce que la seconde image est prise après avoir porté le liner (2) à une température différente de celle qu'il avait au moment de la prise de la première image et en ce que le déclenchement de la seconde prise d'image est commandé à la détection, à l'extérieur et à proximité de l'enceinte (1), d'une variation, consécutive à la modification de température subie par le liner (2) , du rayonnement infra-rouge externe émis par l'enceinte, égale à un seuil prédéterminé révélant l'arrivée à l'extérieur de l'enceinte du front thermique engendré par la modification de température à l'intérieur, en sorte de faire apparaître sur ledit interférogramme un réseau de franges rendant compte d'éventuelles perturbations de lignes d'isodéplacement locales de la surface externe consécutives à un défaut.

2. Procédé suivant la revendication 1, caractérisé en ce que ledit liner (2) est porté à ladite température différente par application à l'intérieur de l'enceinte (1) d'un fluide.

3. Procédé suivant la revendication 1, caractérisé en ce que ledit liner (2) est porté à ladite température différente par introduction à l'intérieur de l'enceinte (1) d'une source de rayonnement infra-rouge.

4. Procédé suivant les revendications 1 et 2, caractérisé en ce que l'application dudit fluide à l'intérieur de l'enceinte (1) est faite avant le déclenchement de la première prise d'image.

5. Procédé suivant les revendications 2 et 4, caractérisé en ce que le déclenchement de la première prise d'image est effectué après que la température de l'enceinte (1) a atteint, à partir de la température ambiante, la partie rectiligne de la rampe, de montée ou de descente de la température de l'enceinte consécutive à l'application dudit fluide à l'intérieur de ladite enceinte.

6. Procédé suivant la revendication 5, caractérisé en ce que le fluide appliqué à l'intérieur de l'enceinte (1) est régulé en température et en débit en sorte d'amener la température de l'enceinte (1) entre la température ambiante et une température limite prédéterminée suivant une courbe de montée, ou descente, rectiligne.

7. Procédé suivant l'une des revendications 1 à 3, caractérisé en ce qu'après avoir effectué sur une partie déterminée de la surface de l'enceinte (1) un premier interférogramme par la prise desdites première et seconde images, on effectue sur une deuxième partie de ladite surface, un deuxième interférogramme dans des conditions analogues et on renouvelle l'opération autant de fois que nécessaire pour couvrir toute la zone à contrôler de l'enceinte, en sorte d'obtenir au total n interférogrammes.

8. Procédé suivant la revendication 6 ou 7, caractérisé en ce que les interférogrammes sont réalisés les uns à la suite des autres, au cours de la même variation de la température de l'enceinte (1).

9. Procédé suivant l'une des revendications 6 à 8, caractérisé en ce que pour chaque interférogramme la prise de la seconde image est déclenchée à la détection, à l'extérieur et à proximité de l'enceinte, d'une variation de la température de l'enceinte par rapport à la température à l'instant de la prise de la première image, égale à un seuil prédéterminé.

10. Procédé suivant la revendication 9, caractérisé en ce que ledit seuil de variation de température est de l'ordre de 0,1 à 0,2 °C.

11. Procédé suivant l'une des revendications 2, 4 à 10, caractérisé en ce que le fluide appliqué à l'intérieur de l'enceinte (1) est de l'air.

12. Dispositif pour la mise en oeuvre du procédé selon l'une des revendications 1 à 3, comportant des moyens (9) de support de l'objet (1) à contrôler, une caméra holographique (15), un montage optique comprenant un laser d'enregistrement (12) et des moyens optiques (13,32 ; 40 à 46) pour l'obtention de faisceaux objet (11), de référence (14), et de relecture, caractérisé en ce que les moyens (9) de support de l'objet à contrôler sont agencés de manière à supporter l'enceinte (1), en ce qu'il comprend, en outre, un laser de relecture (31), des moyens (21 à 23) pour appliquer de manière homogène à l'ensemble de la face interne de l'enceinte (1) une sollicitation thermique, des moyens (38) pour détecter un seuil prédéterminé de variation de la température d'au moins une partie de la face externe de l'enceinte (1), par le rayonnement infra-rouge externe émis par l'enceinte et des moyens (28) reliés à la caméra holographique (15), aux lasers d'enregistrement (12) et de relecture (31) et auxdits moyens (38) de détection de la température de l'enceinte (1) pour commander les prises d'images holographiques.

13. Dispositif suivant la revendication 12, caractérisé en ce que lesdits moyens de support de l'enceinte (1) à contrôler sont constitués par un support en forme de fourche (9) aux extrémités de laquelle est fixée de manière amovible l'enceinte (1) suivant un axe de symétrie de cette dernière, des moyens (9a à 9g) étant prévus pour faire pivoter de manière contrôlée, d'une part, l'enceinte autour dudit axe et, d'autre part, ledit support en forme de fourche (9) autour d'un axe perpendiculaire audit axe de l'enceinte (1).

14. Dispositif suivant la revendication 12 ou 13, caractérisé en ce que lesdits moyens pour faire varier la température du liner (2) de l'enceinte (1) sont des moyens pour injecter à l'intérieur de l'enceinte un fluide, des moyens (25, 29) étant prévus pour contrôler la température et le débit dudit fluide.

15. Dispositif suivant la revendication 14, caractérisé en ce que lesdits moyens pour injecter le fluide à l'intérieur de l'enceinte (1) sont une canne diffusante (23) associée à une canalisation (24) d'évacuation du fluide après circulation à l'intérieur de l'enceinte.

16. Dispositif suivant la revendication 15, caractérisé en ce que ladite canalisation (24) d'évacuation du fluide est reliée à un circuit de recyclage du fluide à l'intérieur de l'enceinte (1).

17. Dispositif suivant la revendication 12 ou 13, caractérisé en ce que lesdits moyens pour faire varier la température du liner (2) de l'enceinte (1) sont une source de rayonnement infra-rouge.

18. Dispositif suivant l'une des revendications 12 à 17, caractérisé en ce que les moyens de support (9) et de positionnement (49 à 56) de l'enceinte (1) à contrôler et les moyens optiques d'enregistrement holographiques sont montés sur un châssis flottant (18) reliés au sol par un système amortisseur (19).

19. Dispositif suivant l'une des revendications 12 à 18, caractérisé en ce qu'il comporte, en outre, une caméra de visualisation (17) placée derrière la caméra holographique (15) et reliée à un moniteur vidéo (33).

20. Dispositif suivant l'une des revendications 12 à 19, caractérisé en ce que le montage optique comporte une séparatrice constituée d'une plaquette (47) mobile de façon à présenter dans l'axe du faisceau des lasers d'enregistrement (12) et de relecture (31), soit l'une de plusieurs lames séparatrices (L*1*,L*2*) de caractéristiques adaptées à la nature du matériau composite de l'enceinte, en vue du réglage du rapport faisceau de référence (14)/ faisceau objet (11), soit une lame (48) laissant passer l'intégralité du faisceau laser sur la branche référence (14), lors de la relecture.

21. Dispositif suivant l'une des revendications 12 à 20, caractérisé en ce qu'il comporte un micro-ordinateur (28), équipé d'une imprimante (34) et relié aux divers éléments, composants ou paramètres à commander et/ou contrôler, de la caméra holographique (15), des lasers (12,30,31) et du montage optique, des moyens de support et positionnement (9) de l'enceinte (1), des moyens (23) pour faire varier la température du liner (2) de l'enceinte, des moyens (38) de détection de la température de l'enceinte à l'extérieur de celle-ci, et l'éventuelle caméra de visualisation (17), ledit micro-ordinateur (28) étant programmé pour effectuer automatiquement une séquence complète d'interférogrammes de contrôle de l'enceinte (1).

## Patentansprüche

1. Verfahren zur zerstörungsfreien Kontrolle eines Objekts (1) durch holographische Interferometrie zum Feststellen eventueller Fehler wie Knicke, bei dem man zwei holographische Bilder des gleichen, zu kontrollierenden Bereichs, die in zwei unterschiedlichen thermischen Belastungszuständen aufgenommen wurden, interferieren läßt, dadurch gekennzeichnet, daß das Objekt ein Behälter (1) aus Verbundmaterial (3) ist, das auf einen metallischen Liner (2) gewickelt ist, daß die thermische Belastung homogen auf die gesamte Innenfläche des Behälters ausgeübt und die Aufnahme des Interferogramms auf wenigstens einem Teil der Außenfläche des Behälters vorgenommen wird, daß das zweite Bild aufgenommen wird, nachdem der Liner (2) auf eine unterschiedliche Temperatur zu derjenigen, die er im Moment der Aufnahme des ersten Bildes hatte, gebracht wurde, und daß das Auslösen der zweiten Bildaufnahme durch Detektion, im Außenraum und benachbart zum Behälter (1), einer Änderung der externen, durch den Behälter emittierten Infrarotstrahlung, die der Temperaturänderung, der der Liner (2) unterworfen wird, gleich einer vorbestimmten Schwelle, die für die Ankunft der durch die Temperaturänderung im Innern erzeugten thermischen Front an der Außenseite des Behälters relevant ist, derart folgt, daß in dem Interferogramm ein Netz von Streifen erscheint, die über eventuelle lokale Störungen von aufeinanderfolgenden Verschiebungslinien gleichen Abstands der Außenfläche auf einen Fehler hinweisen.

2. Verfahren nach Anspruch 1, dadurch gekennzeichnet, daß der Liner (2) auf die unterschiedliche Temperatur durch Einbringen eines Fluids in das Innere des Behälters (1) gebracht wird.

3. Verfahren nach Anspruch 1, dadurch gekennzeichnet, daß der Liner (2) auf die unterschiedliche Temperatur durch Einbringen einer Infrarotstrahlungsquelle in das Innere des Behälters (1) gebracht wird.

4. Verfahren nach Anspruch 1 und 2, dadurch gekennzeichnet, daß die Einbringung des Fluids in das Innere des Behälters (1) vor dem Auslösen der ersten Bildaufnahme vorgenommen wird.

5. Verfahren nach den Ansprüche 2 und 4, dadurch gekennzeichnet, daß das Auslösen der ersten Bildaufnahme bewirkt wird, nachdem die Temperatur des Behälters (1) ausgehend von Umgebungstemperatur den geradlinigen Bereich der Rampe des Anstiegs oder des Abfalls der Temperatur des Behälters nach Einbringung des Fluids in das Innere des Behälters erreicht.

6. Verfahren nach Anspruch 5, dadurch gekennzeichnet, daß das in das Innere des Behälters (1) eingebrachte Fluid auf eine Temperatur und Menge derart geregelt wird, daß die Temperatur des Behälters (1) zwischen Umgebungstemperatur und einer vorbestimmten Temperturgrenze gemäß einer geradlinigen ansteigenden oder absteigenden Kurve geändert wird.

7. Verfahren nach einem der Ansprüche 1 bis 3, dadurch gekennzeichnet, daß man, nachdem in einem vorbestimmten Abschnitt der Oberfläche des Behälters (1) ein erstes Interferogramm durch Aufnahme des ersten und zweiten Bildes erstellt wurde, auf einem zweiten Abschnitt der Oberfläche ein zweites Interferogramm unter analogen Konditionen erstellt und den Vorgang so oft wiederholt, wie notwendig ist, um den gesamten zu kontrollierenden Bereich des Behälters abzudecken, so daß insgesamt n Interferogramme erhalten werden.

8. Verfahren nach Anspruch 6 oder 7, dadurch gekennzeichnet, daß die Interferogramme nacheinander im Verlauf der gleichen Änderung der Temperatur des Behälters (1) realisiert werden.

9. Verfahren nach einem der Ansprüche 6 bis 8, dadurch gekennzeichnet, daß für jedes Interferogramm die Aufnahme des zweiten Bildes bei Detektion, im Außenraum und benachbart zum Behälter, einer Änderung der Temperatur des Behälters in bezug auf die Temperatur im Moment der Aufnahme des ersten Bildes gleich einer vorbestimmten Schwelle ausgelöst wird.

10. Verfahren nach Anspruch 9, dadurch gekennzeichnet, daß die Schwelle der Temperaturänderung in der Größenordnung von 0,1 bis 0,2°C ist.

11. Verfahren nach einem der Ansprüche 2, 4 bis 10, dadurch gekennzeichnet, daß das in das Innere des Behälters (1) eingebrachte Fluid Luft ist.

12. Vorrichtung zur Durchführung des Verfahrens nach einem der Ansprüche 1 bis 3, umfassend Mittel (9) zum Aufnehmen des zu kontrollierenden Objekts (1), eine holographische Kamera (15), einen optischen Aufbau umfassend einen Aufzeichnungslaser (12) und optische Mittel (13, 32; 40 bis 46) zum Erhalten eines Objektstrahls (11), eines Referenzstrahls (14) und eines Korrekturlesstrahls, dadurch gekennzeichnet, daß die Mittel (9) zum Aufnehmen des zu kontrollierenden Objekts derart ausgebildet sind, daß sie den Behälter (1) tragen, daß sie zudem einen Laser (31) zum Korrekturlesen, Mittel (21 bis 23) zum homogenen Anlegen einer thermischen Belastung an das Innere des Behälters (1), Mittel (38) zum Feststellen einer vorbestimmten Schwelle einer Temperaturänderung auf wenigstens einem Teil der Außenfläche des Behälters (1) durch äußere Infrarotstrahlung, emittiert durch den Behälter, und Mittel (28), die mit der holographischen Kamera (15), dem Aufzeichnungslaser (12) und dem Korrekturleslaser (31) und mit den Mitteln (38) zum Feststellen der Temperatur des Behälters (1) verbunden sind, zum Steuern der holographischen Bildaufnahmen aufweist.

13. Vorrichtung nach Anspruch 12, dadurch gekennzeichnet, daß die Mittel zum Aufnehmen des zu kontrollierenden Behälters (1) durch einen gabelförmigen Träger (9) gebildet werden, an dessen Enden der Behälter (1) längs einer Symmetrieachse hiervon lösbar befestigt ist, wobei Mittel (9a bis 9g) vorgesehen sind, um einerseits den Behälter um diese Achse in gesteuerter Weise und andererseits den gabelförmigen Träger (9) um eine Achse senkrecht zu dieser Achse des Behälters (1) zu drehen.

14. Vorrichtung nach Anspruch 12 oder 13, dadurch gekennzeichnet, daß die Mittel zum Ändern der Temperatur des Liners (2) des Behälters (1) Mittel zum Einführen eines Fluids in das Innere des Behälters sind, wobei Mittel (25, 29) zum Steuern der Temperatur und der Menge des Fluids vorgesehen sind.

15. Vorrichtung nach Anspruch 14, dadurch gekennzeichnet, daß die Mittel zum Einführen des Fluids in das Innere des Behälters (1) ein Diffusorrohr (23) in Verbindung mit einer Abführleitung (24) für das Fluid nach Umlauf im Inneren des Behälters sind.

16. Vorrichtung nach Anspruch 15, dadurch gekennzeichnet, daß die Abführleitung (24) für das Fluid mit einem Fluidkreislauf im Inneren des Behälters (1) verbunden ist.

17. Vorrichtung nach Anspruch 12 oder 13, dadurch gekennzeichnet, daß die Mittel zum Variieren der Temperatur des Liners (2) des Behälters (1) eine Infrarotstrahlungsquelle sind.

18. Vorrichtung nach einem der Ansprüche 12 bis 17, dadurch gekennzeichnet, daß die Mittel (9) zum Aufnehmen und die Mittel (49 bis 56) zum Positionieren des zu kontrollierenden Behälters (1) und die optischen Mittel zur holographischen Aufnahme in einem schwimmenden Gehäuse (18) angeordnet sind, die mit dem Boden über ein Dämpfungssystem (19) verbunden sind.

19. Vorrichtung nach einem der Ansprüche 12 bis 18, dadurch gekennzeichnet, daß sie zudem eine Videokamera (17), die hinter der holographischen Kamera (15) angeordnet und mit einem Videomonitor (33) verbunden ist, umfaßt.

20. Vorrichtung nach einem der Ansprüche 12 bis 19, dadurch gekennzeichnet, daß die optische Anordnung ein Trennmittel bestehend aus einer beweglichen Platte (47) zum Präsentieren in der Achse des Strahls des Aufzeichnungslasers (12) und des Lese lasers (31) entweder eine von mehreren trennenden Platten (L1, L2) mit an die Art des Verbundmaterials des Behälters angepaßten Eigenschaften, um das Verhältnis von Bezugstrahl (14)/Objektstrahl (11) zu regeln, oder einer Platte (48) zum Durchlassen der Gesamtheit des Laserstrahls zum Bezugszweig (14) während des Lesens umfaßt.

21. Vorrichtung nach einem der Ansprüche 12 bis 20, dadurch gekennzeichnet, daß sie einen Mikrocomputer (28), der mit einem Drucker (34) versehen ist und mit verschiedenen Elementen, Komponenten, wo Parameter zu steuern und/oder zu kontrollieren sind, der holographischen Kamera (15), den Lasern (12, 30, 31) und der optischen Anordnung, den Mitteln (9) zum Tragen und Positionieren des Behälters (1), den Mitteln (23) zum Ändern der Temperatur des Liners (2) des Behälters, Mitteln (38) zum Feststellen der Temperatur des Behälters an der Außenseite hiervon und gegebenenfalls der Videokamera (17) verbunden ist, wobei der Mikrokomputer (28) programmiert ist, um automatisch eine vollständige Abfolge von Interferogrammen zur Kontrolle des Behälters (1) vorzunehmen.

## Claims

1. Method for the non-destructive testing of an object (1) by holographic interferometry with a view to detecting any defects such as buckling, in which two holographic images of the same area to be inspected, taken in two different thermal stress states, are caused to interfere, characterised in that the object is an enclosure (1) made of composite material (3) wound on a metallic liner (2), in that the thermal stress is applied homogeneously to the entire internal face of the enclosure and the interferogram is taken on at least part of the external face of the enclosure, in that the second image is taken after having raised the liner (2) to a temperature different from that which it had at the time the first image was taken, and in that triggering of the second taking of an image is demanded when a variation is detected, outside and close to the enclosure (1), consequent upon the change in temperature undergone by the liner (2), in the external infrared radiation emitted by the enclosure, equal to a predetermined threshold revealing the arrival outside the chamber of the thermal front generated by the change in temperature inside, so as to cause to appear on the said interferogram a network of fringes indicating any disturbances of local isodisplacement lines on the external surface consequent upon a defect.

2. Method according to Claim 1, characterised in that the said liner (2) is raised to the said different temperature by applying a fluid to the inside of the enclosure (1).

3. Method according to Claim 1, characterised in that the said liner (2) is raised to the said different temperature by introducing a source of infrared radiation inside the enclosure (1).

4. Method according to Claims 1 and 2, characterised in that the said fluid is applied inside the enclosure (1) before the first taking of an image is triggered.

5. Method according to Claims 2 and 4, characterised in that the first taking of an image is triggered after the temperature of the enclosure (1) has reached, starting from ambient temperature, the rectilinear part of the slope of rise or fall of the temperature of the enclosure consequent upon the application of the said fluid inside the said enclosure.

6. Method according to Claim 5, characterised in that the fluid applied inside the enclosure (1) is regulated in temperature and flow rate so as to bring the temperature of the enclosure (1) between ambient temperature and a predetermined limit temperature according to a rectilinear rise or fall curve.

7. Method according to one of Claims 1 to 3, characterised in that, after having effected, on a given part of the surface of the enclosure (1), a first interferogram by taking the said first and second images, a second interferogram is effected on a second part of said surface under similar conditions, and the operation is repeated as many times as necessary to cover the entire area of the chamber to be inspected, so as to obtain in total n interferograms.

8. Method according to Claim 6 or 7, characterised in that the interferograms are carried out one after the other, during the same variation in temperature of the enclosure (1).

9. Method according to one of Claims 6 to 8, characterised in that, for each interferogram, the taking of the second image is triggered when, outside and close to the enclosure, a variation in the temperature of the enclosure is detected with respect to the temperature at the time of taking of the first image, equal to a predetermined threshold.

10. Method according to Claim 9, characterised in that said temperature variation threshold is around 0.1 to 0.2°C.

11. Method according to one of Claims 2, 4 to 10, characterised in that the fluid applied to the inside of the enclosure (1) is air.

12. Device for implementing the method according to one of Claims 1 to 3, having means (9) of supporting the object (1) to be inspected, a holographic camera (15), an optical assembly comprising a recording laser (12) and optical means (13, 32; 40 to 46) for obtaining object (11), reference (14) and reading beams, characterised in that the means (9) of supporting the object to be inspected are arranged so as to support the enclosure (1), in that it also comprises a reading laser (31), means (21 to 23) for applying a thermal stress homogeneously to the entire internal face of the enclosure (1), means (38) for detecting a predetermined threshold of variation in the temperature of at least part of the external face of the enclosure (1), by means of the external infrared radiation emitted by the enclosure, and means (28) connected to the holographic camera (15), to the recording (12) and reading (31) lasers and to said means (38) of detecting the temperature of the enclosure (1) in order to control the taking of holographic images.

13. Device according to Claim 12, characterised in that said means of supporting the enclosure (1) to be inspected consist of a fork-shaped support (9), at the ends of which the enclosure (1) are removably fixed along an axis of symmetry of the latter, means (9a to 9g) being provided to cause on the one hand the enclosure to pivot about said axis in a controlled fashion and on the other hand said fork-shaped support (9) to pivot about an axis perpendicular to said axis of the enclosure (1).

14. Device according to Claim 12 or 13, characterised in that said means for varying the temperature of the liner (2) of the enclosure (1) are means for injecting a fluid inside the enclosure, means (25, 29) being provided for controlling the temperature and flow of said fluid.

15. Device according to Claim 14, characterised in that said means for injecting fluid inside the enclosure (1) are a diffusing tube (23) associated with a pipe (24) for discharging fluid after circulation inside the enclosure.

16. Device according to Claim 15, characterised in that said fluid discharge pipe (24) is connected to a circuit for recycling fluid inside the enclosure (1).

17. Device according to Claim 12 or 13, characterised in that said means for varying the temperature of the liner (2) of the enclosure (1) are a source of infrared radiation.

18. Device according to one of Claims 12 to 17, characterised in that the means of supporting (9) and positioning (49 to 56) the enclosure (1) to be inspected and the holographic recording optical means are mounted on a floating chassis (18) connected to the floor by a damping system (19).

19. Device according to one of Claims 12 to 18, characterised in that it also includes a display camera (17) positioned behind the holographic camera (15) and connected to a video monitor (33).

20. Device according to one of Claims 12 to 19, characterised in that the optical assembly includes a separator consisting of a plate (47) movable so as to present, in line with the beam of the recording (12) and reading (31) lasers, either one of several separating blades (L1, L2) with characteristics adapted to the nature of the composite material of the enclosure, with a view to adjusting the ratio between the reference beam (14) and the object beam (11), or a blade (48) allowing the entire laser beam to pass on the reference branch (14), during reading.

21. Device according to one of Claims 12 to 20, characterised in that it includes a microcomputer (28) equipped with a printer (34) and connected to the various elements, components or parameters to be controlled and/or monitored, of the holographic camera (15), of the lasers (12, 30, 31) and of the optical assembly, means of supporting and positioning (9) the enclosure (1), means (23) for varying the temperature of the liner (2) of the enclosure, means (38) of detecting the temperature of the enclosure on the outside thereof, and any display camera (17), said microcomputer (28) being programmed to automatically effect a complete sequence of inspection interferograms for the enclosure (1).
